# EUROPÄISCHE PATENTANMELDUNG

(11) **EP 2 529 920 A2**
(43) Veröffentlichungstag der Anmeldung: **05.12.2012**
(21) Anmeldenummer: 12159298.4
(22) Anmeldetag: 13.03.2012
(51) Int. Cl.: B29C 70/46, B29C 70/54, B29C 70/78, B29K 705/00, B29C 43/02

(54) **Verfahren zur Herstellung eines Hybridbauteils sowie Abdeckung zur Verwendung bei der Herstellung**

(30) Priorität: 30.05.2011 DE 102011050701
(71) Anmelder: Benteler SGL GmbH & Co. KG, 33102 Paderborn (DE); Benteler Automobiltechnik GmbH, 33102 Paderborn (DE)
(72) Erfinder: Kleine, Markus, 59597 Erwitte (DE); Willeit, Stefan, 33824 Werther/Westfalen (DE); Dinius, Waldemar, 33098 Paderborn (DE); Buschsieweke, Otto, 33102 Paderborn (DE); Herlach, Konstantin, 33104 Paderborn (DE); Wohletz, Bernd, 86405 Meitingen (DE); Steinle, Andreas, 89438 Holzheim (DE)
(74) Vertreter: Ksoll, Peter

(57) **Zusammenfassung**

Die Erfindung betrifft ein Verfahren zur Herstellung eines Hybridbauteils 1 sowie eine Abdeckung 8 zur Verwendung bei der Herstellung des Hybridbauteils. Das Hybridbauteil 1 besteht aus einem metallischen Basisprofil 2, welches durch ein Verstärkungselement 3 aus einem Faserverbundwerkstoff partiell verstärkt ist. Zum Fügen des Basisprofils 2 mit dem Verstärkungselement 3 werden diese in einem Presswerkzeug 4 miteinander verpresst. Erfindungsgemäß wird das Verstärkungselement 3 beim Pressvorgang durch eine Abdeckung 8 abgedeckt, wobei die Abdeckung 8 eine harzabsorbierende Sauglage 9 umfasst. Harz, welches beim Pressvorgang aus dem Verstärkungselement 3 austritt, wird von der Sauglage 9 aufgenommen und somit von nicht zu benetzenden Bereichen des Presswerkzeugs 4 und Hybridbauteil 1 ferngehalten. Nach dem Pressvorgang wird die Abdeckung 8 entfernt.

## Beschreibung

Die vorliegende Erfindung betrifft ein Verfahren zur Herstellung eines Hybridbauteils für ein Kraftfahrzeug gemäß den Merkmalen im Oberbegriff von Patentanspruch 1 sowie eine Abdeckung zur Verwendung bei der Herstellung des Hybridbauteils gemäß den Merkmalen im Oberbegriff von Patentanspruch 6.

Das Anforderungsprofil an moderne Kraftfahrzeugbauteile ist ein geringes Bauteil-Gewicht, bei gleichzeitig gezielt definierten Festigkeitseigenschaften. Die Kraftfahrzeughersteller sind daher bestrebt, die Bauteile möglichst leicht zu gestalten, sodass eine Verbrauchs- und auch CO₂-Reduktion durch ein geringes Kraftfahrzeuggewicht begünstigt wird. Gleichzeitig dürfen die Anforderungen an die Bauteileigenschaften, wie z. B. die Festigkeit, die Steifigkeit und die Lebensdauererwartung der Kraftfahrzeugbauteile nicht reduziert werden. Günstigstenfalls sollen diese sogar bei reduziertem Gewicht erhöht werden.

Ein innovativer Ansatz sind Hybridbauteile, welche ein metallisches Basisprofil aufweisen, das durch ein Verstärkungselement aus einem Faserverbundwerkstoff partiell verstärkt ist. Ein solches Hybridbauteil ist beispielsweise in der DE 10 2004 003 190 A1 beschrieben.

Aus der DE 10 2008 039 869 A1 geht ein Herstellungsverfahren hervor, bei dem Metallbauteile mit Faserverbundwerkstoffen verstärkt werden, sodass besonders leichte Kraftfahrzeugstrukturbauteile hergestellt werden, die hohe Festigkeits- und Steifigkeitsanforderungen erfüllen.

Zur Herstellung eines Hybridbauteils werden ein oder mehrere Verstärkungselemente in Form von sogenannten Prepregs im bzw. am Basisprofil positioniert und die beiden Bauteile dann in einem Presswerkzeug miteinander verpresst. Das Matrixharz des Prepregs selber übernimmt dabei die Verbindung bzw. Verklebung zwischen Faserverbundwerkstoff und dem Basisprofil, sodass eine zusätzliche Fügeoperation entfällt.

Problematisch ist hier vor allem das beim Pressvorgang aus dem Prepreg austretende Harz. Das Harz ist bei den prozessbedingten Temperaturen von circa 160° C sehr niederviskos. In Folge dessen verteilt sich das austretende bzw. überschüssige Harz relativ leicht und dringt auch in kleinste Spalte ein. Das hat zur Folge, dass sowohl das Presswerkzeug als auch das Bauteil unerwünscht von Harz benetzt werden. Hierdurch muss zum einen das Bauteil einem zusätzlichen Reinigungsschritt unterzogen werden und auch das Presswerkzeug häufig gewartet werden.

Zur Vermeidung der unerwünschten Verunreinigungen gibt es Vorschläge, welche Gummidichtungen oder speziell abdichtend geformte Werkzeuge vorsehen. Diese erscheinen jedoch für die Praxis weniger vorteilhaft. Gummidichtungen sind nicht optimal, da das aggressive Harz zur Korrodierung des Gummiwerkstoffes führt und diesen vorzeitig altern lässt. Außerdem müssen diese Elemente in zusätzlichen Arbeitsschritten platziert und anschließend wieder entfernt werden, was entsprechend aufwendig ist. Spezielle Werkzeugformen sind herstellungstechnisch aufwendig und gewähren durch die hohe Kriechfähigkeit des Harzes auch keine vollständige Abdichtung.

Aus der DE 10 2006 058 602 A1 ist ein Verfahren bekannt zur Herstellung eines Hybridbauteils, wobei ein metallisches Basisprofil mit einem Verstärkungselement aus einem Faserverbundwerkstoff versehen wird, wozu das Basisprofil und das Verstärkungselement zusammengeführt und in einem Pressenwerkzeug verpresst werden.

Des Weiteren zählt durch die DE 30 09 909 A1 ein Verfahren zum Stand der Technik, bei dem zur Formgebung eines faserverstärkten Verbundkörpers in einem Pressenwerkzeug zwischen faserverstärktem Verbundkörper und dem Pressenwerkzeug eine Abdeckung eingegliedert wird. Die Abdeckung umfasst eine harzabsorbierende Sauglage, wodurch beim Pressvorgang aus dem faserverstärkten Verbundkörper austretendes Harz von der Sauglage aufgenommen wird.

Zum Stand der Technik zählt ferner die EP 1 967 354 A1. Daraus ist ein Verfahren zum kontinuierlichen Formen eines Verbundmaterialprepreg mit einer gestuften Querschnittsdicke bekannt, bei dem das Verbundmaterialprepreg, das durch Benetzen eines thermohärtenden Harzes auf ein Kohlenstofffasermaterial oder dergleichen erhalten worden ist, intermittierend in der Längsrichtung zugeführt wird und dann eine Form sowie einen Nachhärteofen durchläuft.

Der Erfindung liegt daher ausgehend vom Stand der Technik die Aufgabe zu Grunde, ein anwendungstechnisch verbessertes Verfahren zur Herstellung eines qualitativ hochwertigen Hybridbauteils für ein Kraftfahrzeug aufzuzeigen, bei dem Verschmutzungen des Presswerkzeugs zumindest weitestgehend vermieden werden können und das Basisprofil des Hybridbauteils in definierten Bereichen harzfrei gehalten werden kann.

Weiterhin ist es Aufgabe der Erfindung, ein Mittel bereitzustellen zur Verwendung bei der Herstellung von Hybridbauteilen, welches eine Verschmutzung des Presswerkzeugs weitestgehend verhindert und zur Steigerung der Qualität des Hybridbauteils beiträgt.

Der verfahrensmäßige Teil der Aufgabe wird durch ein Verfahren mit den Merkmalen von Patentanspruch 1 gelöst.

Vorteilhafte Ausgestaltungen und Weiterbildungen des Verfahrens zeigen die abhängigen Patentansprüche 2 bis 5 auf.

Beim Pressvorgang wird zwischen das Presswerkzeug bzw. den Teilen des Presswerkzeugs, die auf das Verstärkungselement und das Basisprofil einwirken, eine Abdeckung eingegliedert, welche einen Kontakt zwischen dem Presswerkzeug und zumindest dem Verstärkungselement verhindert. Die Abdeckung weist eine harzabsorbierende Sauglage auf. Überschüssiges, aus dem Verstärkungselement beim Pressvorgang austretendes Harz, wird von der Sauglage absorbiert bzw. aufgenommen. Hierdurch kann ein unkontrolliertes Verteilen und Ausbreiten des Harzes auf den benachbarten Oberflächen des Basisprofils verhindert werden. Nach dem Pressvorgang wird die Abdeckung entfernt.

Die Erfindung verhindert mit einfachen Mitteln, dass es zu einer nachteiligen Verunreinigung des Basisprofils bzw. des Hybridbauteils mit Harz kommt. Beim Verpressen befindet sich zwischen dem Verstärkungselement und dem Stempel des Presswerkzeugs die zusätzliche Abdeckung. Vorzugsweise wird eine mehrlagige Abdeckung verwendet. Insbesondere besteht die Sauglage der Abdeckung aus Vlies, vorzugsweise einem Glasfaser-Vlies. Das Vlies ist an seinen äußeren Flachseiten durch jeweils eine Außenhaut begrenzt. Die Außenhaut verhindert, dass die Abdeckung bzw. die Sauglage am Verstärkungselement oder am Presswerkzeug festklebt.

Vorzugsweise werden die Außenhäute durch eine nicht-haftende Folie gebildet.

Die Abdeckung erfüllt beim Schließen des Presswerkzeugs zwei Aufgaben. Beim Pressvorgang wird die verstärkungselementseitige Außenhaut der Abdeckung perforiert. In der Außenhaut, die am Verstärkungselement anliegt, entstehen kleine Löcher und Risse. Durch diese kann das niederviskose Harz in die Sauglage übertreten und wird durch Kapillarkräfte in die Sauglage eingesaugt. Das überschüssige Harz wird somit effektiv entfernt.

Weiterhin wird die Abdeckung in Randbereichen, insbesondere in horizontalen Abschnitten des Basisprofils so stark komprimiert, dass hier keine Saugwirkung entsteht. Die Randbereiche der Abdeckung werden beim Pressvorgang harzdicht zugehalten. Hierdurch wird das Presswerkzeug in den korrespondierenden Bereichen abgedichtet, sodass Harz nicht über diese gebildete Grenze hinweg kriechen und die Bauteile verschmutzen kann.

Positiv wirkt sich weiter aus, dass durch die Verwendung der Abdeckung ein Toleranzausgleich zwischen dem Basisprofil bzw. dem herzustellenden Hybridbauteil und dem Presswerkzeug erreicht werden kann.

Verfahrenstechnisch bietet es sich an, die Abdeckung vollständig über das Basisprofil mit dem daran positionierten Verstärkungselement zu ziehen und dann das Presswerkzeug zu schließen. Die Abdeckung wird hierbei in Bandform von einem Vorratsspeicher in Form einer Rolle abgezogen und auf dem Basisprofil mit dem darauf positionierten Verstärkungselement abgelegt. Danach erfolgt der Pressvorgang. Nach dem Pressvorgang wird die Abdeckung auf der anderen Seite wieder aufgewickelt, also vom Hybridbauteil entfernt und vorzugsweise auf einer Speichereinheit aufgerollt.

Die Abdeckung wird so positioniert, dass sie beim Pressvorgang zuverlässig ihre Funktion erfüllt und überschüssiges austretendes Harz aufnimmt, vorzugsweise vollständig aufnimmt, sodass eine Verschmutzung des Presswerkzeugs, ebenso wie des Basisprofils weitestgehend verhindert werden kann. Insbesondere kann auch das Basisprofil des Hybridbauteils in definierten Bereichen harzfrei gehalten werden. Dies ist insbesondere für Nachfolgeoperationen, wie beispielsweise Schweißvorgänge, vorteilhaft. Bevorzugt wird der Pressvorgang in einem Presswerkzeug durchgeführt, wobei das Presswerkzeug erwärmt wird. Durch das Erwärmen des Presswerkzeuges kann zum einen das Matrixharz derart beeinflusst werden, dass es leichter fließt, zum anderen kann der Faserverbundwerkstoff durch Wärmeeinwirkung ausgehärtet werden. Hierdurch wird insbesondere die Festigkeit des hergestellten Hybridbauteils erhöht. Gleichzeitig wird die Taktzeit des Herstellungsprozesses durch die beschleunigte Aushärtungsreaktion verringert.

Der gegenständliche Teil der Aufgabe wird durch eine Abdeckung gemäß den Merkmalen im Patentanspruch 6 gelöst.

Zweckmäßige Ausgestaltungen der erfindungsgemäßen Abdeckung sind in den abhängigen Ansprüchen 7 bis 11 charakterisiert.

Die erfindungsgemäße Abdeckung weist eine harzabsorbierende Sauglauge auf. Die Sauglage besteht aus Vlies, vorzugsweise aus einem Glasfaser-Vlies. Vorzugsweise besteht die Sauglage aus einem feinporigen Material, in das Harz durch Kapillarkräfte eingezogen werden kann. Aufgrund eines lockeren Aufbaus der Sauglage bildet diese feine Kapillaren, die Harz aufsaugen. Auf diese Weise wird das beim Fügen des Verstärkungselements mit dem Basisprofil austretende Harz von der Sauglage aufgenommen.

Besonders bevorzugt ist die Abdeckung mehrlagig und weist zumindest eine Sauglage auf, wobei die Sauglage zwischen zwei Außenhäuten eingegliedert ist. Vorzugsweise besteht zumindest eine Außenhaut aus einer nicht-haftenden Folie. Hierdurch kann auf die Verwendung eines Trennmittels zwischen dem Verstärkungselement und dem Stempel des Presswerkzeugs verzichtet werden.

Besonders bevorzugt besteht das Basisprofil aus einem metallischen Werkstoff, insbesondere einem Stahlwerkstoff, vorzugsweise einem hochfesten Stahlwerkstoff.

Als Verstärkungselement kommt insbesondere ein Prepreg-Material zur Anwendung, insbesondere ein kalandriertes Laminat aus verschieden orientierten Lagen Prepreg. Hierbei können die Prepreg-Lagen einen flächigen Ausgangzustand haben und durch den Verpressvorgang in das metallische Basisprofil eingepresst bzw. aufgepresst werden.

Die Abdeckung ist größenmäßig angepasst auf zumindest das abzudeckende Verstärkungselement. Hierbei überdeckt die Abdeckung die äußeren Konturen des Verstärkungselements. Grundsätzlich kann auch die gesamte Fläche des Basisprofils, auf welches der Stempel des Presswerkzeugs einwirkt, mit dem darauf befindlichen Verstärkungselement von der Abdeckung überdeckt werden.

Die Erfindung ist nachfolgend an einem in den schematischen Zeichnungen dargestellten Ausführungsbeispiel beschrieben. Es zeigen:
- Figur 1: ein erfindungsgemäß hergestelltes Hybridbauteil in Form einer B-Säule für ein Kraftfahrzeug;
- Figuren 2 bis 6: die Herstellung eines Hybridbauteils in einem Presswerkzeug mit der Darstellung von fünf Arbeitsschritten.

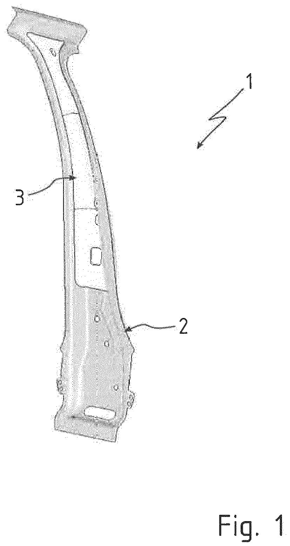

Figur 1 zeigt ein erfindungsgemäß hergestelltes Hybridbauteil 1 in Form einer B-Säule für ein Kraftfahrzeug.

Das Hybridbauteil 1 umfasst ein über den wesentlichen Teil seiner Länge schalenförmig konfiguriertes Basisprofil 2 aus Stahlblech. Das Basisprofil 2 ist durch ein Verstärkungselement 3 aus einem Faserverbundwerkstoff partiell verstärkt. Das Verstärkungselement 3 ist konfigurativ an die Schalenform des Basisprofils 2 angepasst und erstreckt sich in Bildebene etwa von der Mitte des Basisprofils 2 nach oben bis in den Kopfbereich des Basisprofils 2.

Das Verstärkungselement 3 ist durch eine Lage eines Prepregs aus vorimprägnierten Fasern gebildet. Hierbei handelt es sich um ein Halbzeug, bestehend aus Endlosfasern und einer ungehärteten duroplastischen Kunststoffmatrix.

Das Basisprofil 2 und das Verstärkungselement 3 sind miteinander heiß verpresst. Dies erfolgt in einem erwärmten Presswerkzeug 4.

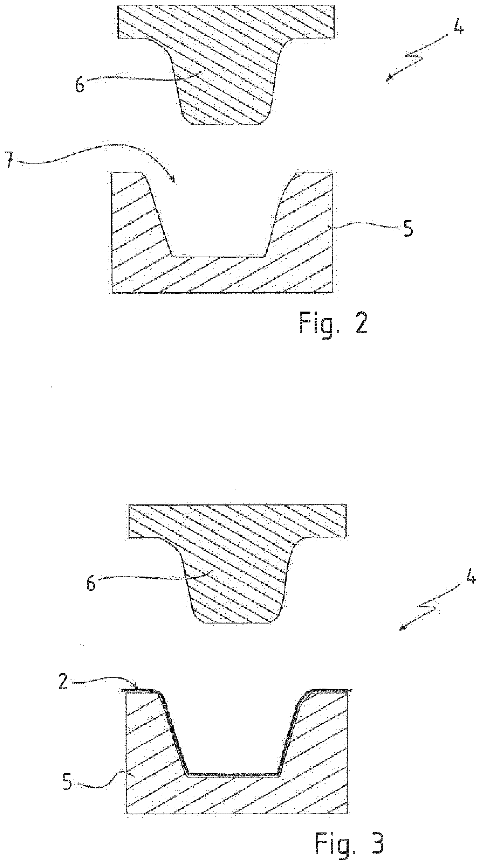

Die Figur 2 zeigt schematisch ein offenes Presswerkzeug 4, welches im Wesentlichen eine Matrize 5 und einen oberen Stempel 6 (Patrize) umfasst.

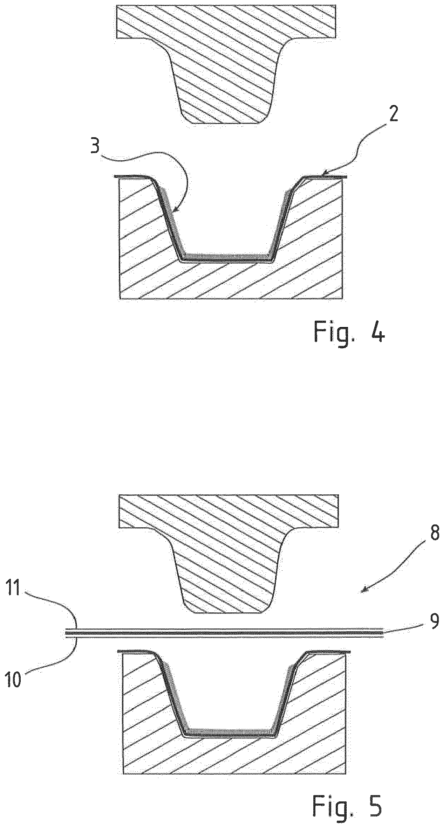

Zur Herstellung eines Hybridbauteils 1 wird das Basisprofil 2 aus Stahlblech bereitgestellt und in die Formaufnahme 7 der Matrize 5 eingelegt. Dies ist in der Figur 3 zu erkennen. Anschließend wird das Verstärkungselement 3 in das Basisprofil 2 eingelegt und positioniert (Figur 4).

Zwischen das Verstärkungselement 3 und dem Presswerkzeug 4 wird eine Abdeckung 8 eingegliedert, wie in der Figur 5 zu erkennen. Die Abdeckung 8 ist mehrlagig und weist eine harzabsorbierende Sauglage 9 auf, die ober- und unterseitig durch eine Außenhaut 10, 11 abgedeckt ist.

Die Sauglage 9 besteht aus einem harzabsorbierbarem Material, insbesondere einem feinporigen Material, in welches Harz durch Kapillarkräfte eingezogen werden kann. Solche feinporige Sauglagen 9 bestehen aus Vlies, insbesondere einem Glasfaser-Vlies mit harzabsorbierenden Eigenschaften.

Die Außenhaut 10 bzw. 11 ist insbesondere eine Folie, vorzugsweise eine nicht-haftende Folie.

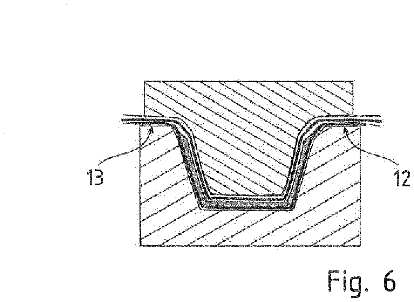

Die Figur 6 zeigt den Pressvorgang. Hierzu wird das Presswerkzeug 4 geschlossen, indem der Stempel 6 abgesenkt und in die Formaufnahme 7 der Matrize 5 eingeführt wird. Unter Druck- und Temperatureinwirkung werden das Basisprofil 2 und das Verstärkungselement 3 miteinander gefügt.

Beim Pressvorgang wird die verstärkungselementseitige Außenhaut 10 perforiert. In der Außenhaut 10, die am Verstärkungselement 3 anliegt, entstehen kleine Löcher und Risse. Durch diese kann das niederviskose Harz in die Sauglage 9 übertreten und wird durch Kapillarkräfte in die Sauglage 9 absorbiert. Auf diese Weise kann das beim Pressvorgang aus dem Verstärkungselement 3 austretende überschüssige Harz aufgenommen und sowohl vom Basisprofil 2 als auch vom Presswerkzeug 4, insbesondere den Kontaktbereichen bzw. Druckflächen des Stempels 6 ferngehalten werden. Nachteilige Verschmutzungen durch Harz können so weitestgehend eliminiert werden. Nach dem Pressvorgang wird die Abdeckung entfernt.

Beim Pressvorgang wird die Abdeckung im oberen horizontalen Abschnitt des Stempels 6 so stark komprimiert, dass hier keine Saugwirkung entsteht. Hierdurch werden die korrespondierenden Randbereiche 12, 13 der Abdeckung 8 beim Pressvorgang harzdicht zugehalten. Hierdurch entsteht eine Abdichtung, sodass Harz nicht austreten und das Presswerkzeug 4 oder das Basisprofil 2 verschmutzen kann.

Verfahrenstechnisch bietet es sich an, die Abdeckung 8 in Bandform bereitzustellen. Die Abdeckung 8 kann von einem Vorratsspeicher abgewickelt und auf dem Basisprofil 2 mit dem darauf positionierten Verstärkungselement 3 abgelegt werden. Nach dem Pressvorgang wird die Abdeckung 8 auf der anderen Seite wieder auf eine Speichereinheit aufgerollt bzw. gewickelt.

**Bezugszeichen:**
- 1 -: Hybridbauteil
- 2 -: Basisprofil
- 3 -: Verstärkungselement
- 4 -: Presswerkzeug
- 5 -: Matrize
- 6 -: Stempel
- 7 -: Formaufnahme
- 8 -: Abdeckung
- 9 -: Sauglage
- 10 -: Außenhaut
- 11 -: Außenhaut
- 12 -: Randbereich v. 8
- 13 -: Randbereich v. 8

## Patentansprüche

1. Verfahren zur Herstellung eines Hybridbauteils (1), insbesondere eines Kraftfahrzeughybridbauteils, wobei ein vorzugsweise metallisches Basisprofil (2) mit einem Verstärkungselement (3) aus einem Faserverbundwerkstoff versehen wird, wozu das Basisprofil (2) und das Verstärkungselement (3) zusammengeführt und in einem Presswerkzeug (4) miteinander verpresst werden, **dadurch gekennzeichnet, dass** zwischen das Verstärkungselement (3) und dem Presswerkzeug (4) eine Abdeckung (8) eingegliedert wird, wozu die Abdeckung (8) in Bandform von einem Vorratsspeicher abgezogen und auf dem Basisprofil (2) mit dem darauf positionierten Verstärkungselement (3) abgelegt wird, wonach der Pressvorgang erfolgt, wobei die Abdeckung (8) eine harzabsorbierende Sauglage (9) umfasst, wodurch beim Pressvorgang aus dem Verstärkungselement (3) austretendes Harz von der Sauglage (9) aufgenommen wird und die Abdeckung (8) nach dem Pressvorgang vom Hybridbauteil (1) entfernt und vorzugsweise auf eine Speichereinheit aufgerollt wird.

2. Verfahren nach Anspruch 1, **dadurch gekennzeichnet, dass** eine mehrlagige Abdeckung (8) verwendet wird.

3. Verfahren nach Anspruch 1 oder 2, **dadurch gekennzeichnet, dass** eine verstärkungselementseitige Außenhaut (10) der Abdeckung (8) beim Pressvorgang perforiert wird.

4. Verfahren nach einem der Ansprüche 1 bis 3, **dadurch gekennzeichnet, dass** Randbereiche (12, 13) der Abdeckung (8) beim Pressvorgang harzdicht zugehalten werden.

5. Verfahren nach einem der Ansprüche 1 bis 4, **dadurch gekennzeichnet, dass** das Verpressen in einem erwärmten Presswerkzeug (4) durchgeführt wird.

6. Abdeckung zur Verwendung bei der Herstellung eines Hybridbauteils (1), wobei die Abdeckung beim Pressvorgang zwischen dem Presswerkzeug (4) und zumindest dem Verstärkungsbauteil (3) positioniert wird, **dadurch gekennzeichnet, dass** die Abdeckung (8) eine harzabsorbierende Sauglage (9) aufweist und die Sauglage (9) aus Vlies, vorzugsweise aus einem Glasfaser-Vlies besteht.

7. Abdeckung nach Anspruch 6, **dadurch gekennzeichnet, dass** die Abdeckung (8) mehrlagig ist.

8. Abdeckung nach Anspruch 6 oder 7, **dadurch gekennzeichnet, dass** die Sauglage (9) zwischen zwei Außenhäuten (10, 11) eingegliedert ist.

9. Abdeckung nach Anspruch 8, **dadurch gekennzeichnet, dass** zumindest eine Außenhaut (10, 11) eine Folie, insbesondere eine nicht-haftende Folie ist.
